(19) Europäisches Patentamt
European Patent Office
Office européen des brevets

(11) **EP 4 542 880 A1**

(12) **EUROPEAN PATENT APPLICATION**

(43) Date of publication:
23.04.2025 Bulletin 2025/17

(21) Application number: 23315393.1

(22) Date of filing: 20.10.2023

(51) International Patent Classification (IPC):
**H04B 10/118** (2013.01)    **H04B 10/61** (2013.01)
**H04B 10/532** (2013.01)    **H04J 14/06** (2006.01)

(52) Cooperative Patent Classification (CPC):
**H04B 10/118; H04B 10/532; H04B 10/614;**
**H04J 14/06**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(71) Applicant: **Nokia Solutions and Networks Oy**
**02610 Espoo (FI)**

(72) Inventors:
• **Boddeda, Rajiv**
**91300 MASSY (FR)**

• **Bigo, Sebastien**
**91300 MASSY (FR)**
• **Renaudier, Jeremie**
**91190 GIF SUR YVETTE (FR)**
• **Pardo, Oriol Bertran**
**20900 Monza, MB (IT)**
• **Almonacil, Sylvain**
**91440 BURES SUR YVETTE (FR)**

(74) Representative: **Innovincia**
**11, avenue des Tilleuls**
**74200 Thonon-Les-Bains (FR)**

(54) **FADING-RESILIENT CIRCUITS FOR COHERENT OPTICAL COMMUNICATIONS**

(57) Apparatus is provided for transmitting and/or for receiving data over a free-space optical link. An optical data transmitter generates duplicate digital data streams carrying a same digital data sequence with a relative temporal offset and mixes them onto two different polarization channels according to a preselected linear mixing rule. An optical data receiver demodulates first and second digital streams from the two polarization channels and unmixes the demodulated data, to produce first and second output digital data streams according to a preselected linear unmixing rule. The receiver applies a quality indicator to select between segments of the respective output digital data streams that correspond to the same transmitted data sequence.

FIG. 1

# EP 4 542 880 A1

**Description**

<u>TECHNICAL FIELD</u>

The disclosure relates generally to apparatus for processing a digital data stream for transmission over a free-space optical link or for reception therefrom.

<u>BACKGROUND</u>

Optical satellite communications using free-space optical links to ground stations have important potential uses. Possible applications include high-capacity data links in low-density populated areas, non-permanent high-capacity data links for industries or military operations, and back-up connectivity for disaster situations or other incidents when terrestrial networks are disabled.

However, the optical signals propagating through the atmosphere over a free-space link are vulnerable to degradation by air turbulence. Air turbulence causes random changes, in both space and time, of the optical beam profile. At the satellite-based or ground-based receiver of the optical link, these effects cause fluctuations in the received optical power. As a consequence, the signal power available for data demodulation varies randomly in time. This effect can be severe enough for the signal power to fall below a threshold for quasi-error-free transmission, even when powerful techniques for error correction are implemented. The resulting fluctuations in signal quality are a type of signal fading.

New approaches for mitigating the effect of air turbulence on optical signals propagating through the atmosphere are needed, not least to increase the resilience of optical satellite systems to fading, so that systems of that kind can be made practical for a greater range of applications.

<u>SUMMARY</u>

We have developed a modified transmitter and receiver that can potentially make a free-space optical link more resilient to fading. At the transmitter side, the data stream is duplicated, and one copy of the data stream is delayed relative to the other. Both copies are modulated onto an optical carrier and transmitted using two orthogonal polarization channels. At the client layer prior to optical modulation, a framer mixes the two copies so that neither polarization channel is exclusively dedicated to one copy of the data stream or the other.

At the receiver side, the respective copies of the data stream are recovered using an optical coherent receiver and a suitable deframer. The delay between the two data streams is compensated. At intervals, the copy of the data stream having the higher signal quality according to a suitable measure can be selected for transmission to the client.

Because the corresponding units of data in the respective copies of the data stream propagate through the time-dependent atmospheric conditions at different times, there is an enhanced probability that at any given moment, at least one copy will be received with enough optical power for data demodulation.

Accordingly, the subject matter of the present disclosure relates, in one aspect, to apparatus in which an optical data receiver is configured to generate first and second demodulated input digital data streams from corresponding first and second data-modulated optical signals received therein via a free-space optical link on corresponding first and second polarization channels. The optical data receiver includes first digital circuitry to generate first and second output digital data streams by unmixing temporally simultaneous and/or adjacent portions of the first and second demodulated digital streams according to a preselected linear unmixing rule. The optical data receiver includes second digital circuitry to select between corresponding segments of the first and second output digital data streams, wherein each segment of a corresponding pair of the segments corresponds to the same transmitted data sequence. The second digital circuitry is configured to perform the selecting based on a quality indicator for the first and second data-modulated signals.

In embodiments, the second digital circuitry is configured to perform the selecting based on estimated bit-error rates of the segments of the first and second output digital data streams.

In embodiments, the first digital circuitry comprises forward error correction circuitry configured to generate indicators of decoding error; and the optical data receiver is configured to determine values of the quality indicator based on the indicators of decoding error.

In embodiments, the optical data receiver is configured to estimate a relative delay between the segments corresponding to a same transmitted data sequence by estimating a correlation between the respective segments. For example, the optical data receiver may be configured to estimate a value for the relative delay between the segments corresponding to a same transmitted data sequence based on data packet identifiers carried by the first and second data-modulated optical signals.

In embodiments, the optical data receiver is configured to receive, via the free-space optical link, a value for a relative delay between the corresponding segments.

In embodiments, the apparatus further comprises an optical data transmitter configured to transmit the first and second data-modulated optical signals to the free space optical link. In some embodiments, the optical data transmitter is configured to cause the first and second data-modulated optical signals to collectively carry plural copies of a same input digital data stream. In some embodiments, the optical data transmitter is configured to transmit the respective first and second data-modulated optical transmissions to different polarization channels via the free-space optical link.

The subject matter of the present disclosure relates, in a second aspect, to an apparatus in which an optical data transmitter is configured to generate first and second digital data streams such that both digital data streams carry a same digital data sequence with a relative temporal offset. The optical data transmitter includes first digital circuitry configured to generate first and second output digital data sequences by mixing simultaneous and/or temporally adjacent portions of the first and second digital data streams according to a preselected linear mixing rule. The optical data transmitter includes an optical front end configured to modulate the first output digital data sequence onto a first polarization component of an optical signal and to modulate the second output digital data sequence onto a different second polarization component of the optical signal.

In embodiments, the first digital circuitry is configured to generate the first and second digital data streams as copies of the digital data sequence and to relatively delay one of the first and second data streams prior to performing the mixing.

In embodiments, the optical data transmitter is configured to transmit the optical signal to a free-space optical channel.

In embodiments, the first digital circuitry is configured to process each of the output digital sequences to provide forward error correction support therein.

BRIEF DESCRIPTION OF THE DRAWINGS

FIG. 1 is a graph showing a plot of a typical received power timeseries for a ground-to-satellite optical link affected by air turbulence. A horizontal line drawn on the graph is an optical power threshold for 99% receiver availability under typical noise conditions and typical transmission characteristics.

FIG. 2 is a graph, obtained by numerical simulation of a model system, in which are plotted two curves of received optical power versus time. Each curve represents transmission of a digital data stream modulated onto a respective optical carrier. The data stream modulated onto one carrier is a delayed copy of the data stream modulated onto the other carrier.

FIG. 3 is a plot of received optical power versus time that was derived from the data plotted in FIG. 2 by selecting, at each time step, the demodulated digital data stream with the better quality.

FIG. 4 is a functional block diagram of a portion of a free-space communication system according to principles described herein.

FIG. 5 is a flowchart of a procedure, in a pedagogical example, for applying a rule for mixing segments of two data streams onto two polarization channels for optical transmission, according to principles described herein.

DETAILED DESCRIPTION

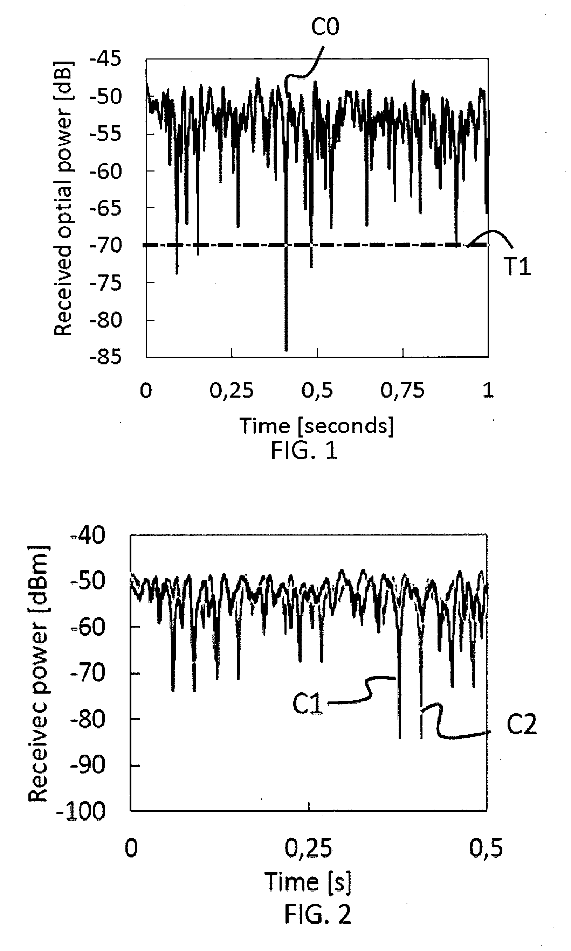

Air turbulence causes a time-varying attenuation of the received optical power, relative to the optical power that would be received over a static atmosphere. For example, FIG. 1 includes a plot **C0** of a typical received power timeseries for a ground-to-satellite optical link affected by air turbulence. The link represented in FIG. 1 is from ground to geostationary satellite, with a launched optical power of 2 W.

In FIG. 1, the received optical power is plotted in dBm relative to the launched optical power.

At any given data transmission rate, the signal-to-noise ratio (SNR) must be at least a certain threshold value in order for the digital signal processor (DSP) of the receiver to successfully decode the transmitted signal. By way of illustration, FIG. 1 includes horizontal line **T1,** which indicates a received optical power threshold for 99% receiver availability under typical noise conditions and typical transmission characteristics.

For example, a digital receiver configured for 100 Gbps transmission may be unable to decode at SNR values below about 2 dB. Assuming that the dominant noise source is amplified spontaneous emission (ASE) in the erbium-doped fiber amplifier (EDFA) of the receiver, the following formula can be used to estimate the received optical power (*ROP*) that is required to achieve a given SNR:

$$ROP\,[dBm] = SNR\,[dB] - \xi\,[dB] - 58 + NF \quad . \tag{I}$$

In Equation (I), the quantity $\xi$ is a scaling factor that accounts for the signal bandwidth. Specifically, $\xi = 12.5/R$, where $R$ is the symbol rate in Gbaud. The quantity NF is the noise figure of the EDFA. Taking a typical symbol rate of 56 Gbaud and a typical noise figure of 4 dB, we compute a required *ROP* of approximately -45 dBm.

With a typical ground/satellite optical link budget, this requires an optical launched power of ~2 W. In other words, an optical power of about 2 W launched into a static atmosphere will achieve a received optical power of about -45 dBm.

In the presence of atmospheric turbulence, however, the launched optical power would have to be increased in order to reach or exceed -45 dBm, for some given fraction of the time. Turning again to FIG. 1, for example, threshold **T1** has been set at -70 dB of received optical power, because that power level would achieve a target of 99% system availability under the assumptions set out above. To reach threshold **T1,** the optical launched power would have to be increased by about 22 dB, i.e. by a multiplicative factor of about 160, relative to the case of a static atmosphere.

It will be understood, accordingly, that under conditions of atmospheric turbulence as represented, e.g., by FIG. 1, a launched optical power on the order of 300 W would be needed to achieve a target availability of 99%. Such a high launched power exceeds the capacity of typical amplifiers in current use. That is, continuous power amplifiers for optical transmitters that are commercially available are generally limited to about 30 W or less.

It should also be understood that the power estimate presented here is a best-case estimate, because we have assumed the benefits of advanced error-correction codes and of adaptive optics for pre-compensation and post-compensation of distortions in the beam waveform.

Several approaches can be taken to reduce the impact of air turbulence on an optical signal propagating through the atmosphere, without requiring a substantial increase in the required optical launch power. One such approach uses spectral diversity. That is, the input digital data stream to be transmitted is duplicated to produce two copies. Each copy of the duplicated digital data stream is modulated onto a different carrier wavelength channel, and the two wavelength channels are multiplexed and jointly transmitted on the same optical path. At the receiver side, each received digital data stream is independently demodulated.

Another approach to reduce the impact of air turbulence uses time diversity. In an example of time diversity, the input digital data stream to be transmitted is again duplicated to produce two copies. One copy of the duplicated digital data stream is delayed by a delay $\Delta T$, relative to the other copy, before modulation at the optical transmitter side. The two copies of the digital data stream are transmitted jointly, but with one stream delayed by $\Delta T$ relative to the other stream.

At the receiver side, the delay $\Delta T$ is compensated so that portions of the respective copies of the digital data stream that correspond to the same sequence of transmitted data bits can be compared, pairwise, relative to a suitable indicator of signal quality. Based on the respective indicator values, one member of the pair or the other can be selected for generating the output digital data stream.

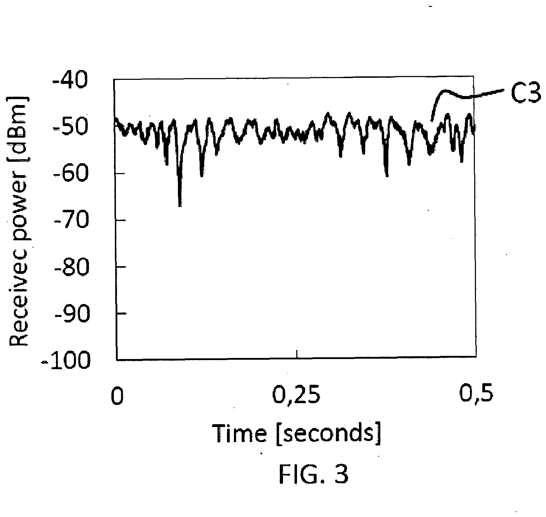

FIGS. 2 and 3 are a pair of graphs, obtained by numerical simulation of a model system that illustrate the potential benefits of time diversity. The time diversity in this example is applied at the client layer. That is, the digital data streams are duplicated, delayed, combined, and selected in the electrical domain, and not through operations performed on optical signals at the physical layer.

In FIG. 2, curve C1 is a plot of received optical power versus time for a first optical carrier that has been modulated with a digital data stream, and curve C2 is a plot of received optical power versus time for a second optical carrier that has been modulated with a delayed copy of the same digital data stream. Curves C1 and C2 were obtained by numerical simulation of a model system. Inspection of the figure makes it evident that by selecting between the two data-modulated optical carriers, it may be possible to avoid some of the intervals of low received optical power that individually affect one carrier or the other at a given time. As a consequence, there may be an enhanced probability that for any given portion of the digital data stream, at least one of the copies will be received with sufficient optical power for successful demodulation and decoding. The value of the relative delay $\Delta T$ may be selectable to optimize the probability of success.

In FIG. 3, curve C3 is a plot of received optical power versus time that illustrates a possible benefit of time diversity. Curve C3 was derived from the respective signals represented in curves C1 and C2 of FIG. 2 by selecting, at each time step, the demodulated digital data stream with the better quality. In the example of FIG. 3, it will be seen that power fluctuations are reduced enough to maintain the received power above about -70dB. As a consequence, the required optical launch power can be reduced by 15 dB relative to the example of FIG. 1.

Herein, we disclose an implementation of time diversity, for optical propagation on a common light path, that uses dual-polarization optical coherent modulation. This approach may be beneficial, not least, because both polarization channels can travel on similar or identical optical paths, so that duplication of ground and satellite telescopes can be avoided.

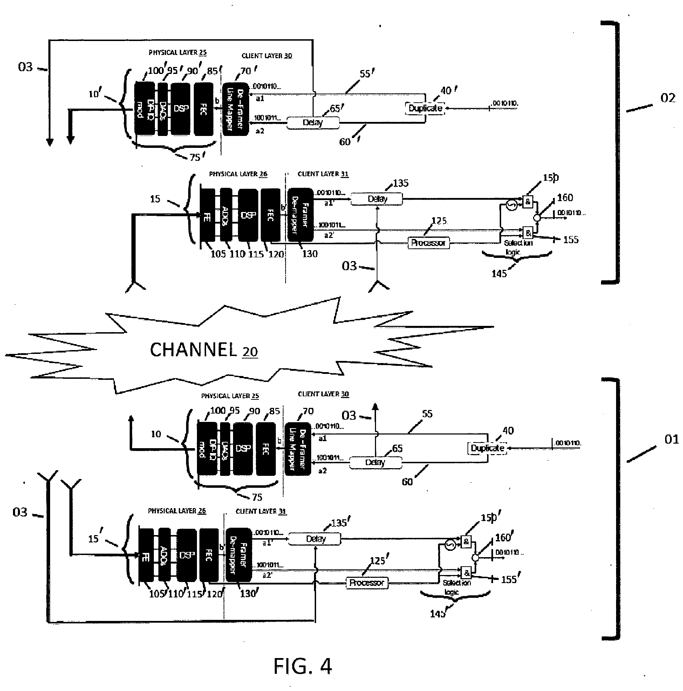

FIG. 4 is a functional block diagram of a portion of a free-space communication system. FIG. 4 is provided to illustrate the architecture, in an example, of a potentially fading-resilient, dual-polarization optical modem that may be used for free-space optical point-to-point (P2P) communications, e.g., for satellite-to-ground P2P communications.

FIG. 4 shows two bidirectional modems **01, 02** in communication across a point-to-point (P2P) free-space optical communication channel **20,** which, by way of example, may be a ground-to-satellite channel. Modem **01** includes transmitter **10** and receiver **15'**. Modem **02** includes transmitter **10'** and receiver **15.**

Solely for purposes of illustration, modem **01** and modem **02** are drawn identically in FIG. 4. Each of drawing elements **40-100** shown in FIG. 4 as components of transmitter **10** corresponds to a respective one of drawing elements **40'-100'** shown in FIG. 4 as components of transmitter **10'**. Likewise, each of drawing elements **105-160** shown in FIG. 4 as components of receiver **15** corresponds to a respective one of drawing elements **105'-160'** shown in FIG. 4 as components of transmitter **15'**.

It should be understood, however, that modem **01** and modem **02** do not need to be identical.

It should also be understood that the subject matter of the present disclosure also encompasses unidirectional implementations, i.e., implementations that lack a bidirectional modem on one or both sides of channel **20**. That is, one side of channel **20** could have only a transmitter and no receiver, one side of channel **20** could have only a receiver and no transmitter, or one side of channel **20** could have only a transmitter while the other side has only a receiver. Unidirectional implementations could be useful, e.g., on asymmetric channels that have one dominant direction of data transmission, or on channels dedicated for downlink-only or uplink-only transmission.

In the scenario illustrated in FIG. 4, transmitter **10** is the coherent optical transmitter portion of first bidirectional modem **01,** which is on the transmitting side of the communication channel. Receiver **15** is the coherent optical receiver portion of second bidirectional modem **02,** which in the illustrated scenario is on the receiving side of the communication channel.

The two modems, which are typically physically remote from each other, are connected via free-space optical P2P propagation channel **20**. Transmitters **10** and **10'** each have a processor with circuitry divided between first circuitry **25** for physical layer processing and second circuitry **30** for client layer processing. Receivers **15** and **15'** each have a processor with circuitry divided between first circuitry **26** for physical layer processing and second circuitry **31** for client layer processing.

A binary bit stream **35** is shown entering transmitter **10** for transmission, and a received binary bit stream **40** is shown exiting receiver **15**.

At the second circuitry **30** of transmitter **10**, the entering bitstream is input to duplicator **40,** which generates two copies of the input bitstream and outputs them on respective branches **55, 60**. The bitstream on branch **55,** here denominated as bitstream a1, proceeds directly as input to de-framer and line mapper **70**.

By contrast, the bitstream on branch **60** proceeds first to delay element **65,** where it is subjected to a delay ∆T. The delayed output from element **65,** which is here denominated as bitstream a2, proceeds as input to the de-framer and line mapper element **70**. Inspection of FIG. 4 shows that in the illustrative example provided there solely for pedagogical purposes, bitstream a2 is delayed by one bit position relative to bitstream a1.

At de-framer and line mapper **70,** the line mapper distributes the bitstreams a1 and a2 across two parts of the output digital signal stream according to a preselected, typically linear, rule for mixing the respective bitstreams. The mixing is applied to simultaneous and/or to temporally adjacent portions of the respective bitstreams. Each part of the output digital signal stream is subsequently carried by a corresponding one of two mutually orthogonal polarizations of the transmitted optical signal.

Particularly, the mapping of the respective bitstreams is performed such that neither bitstream a1 nor bitstream a2 will be carried by only a single polarization component of the output data-carrying optical carrier. The particular predefined structure must be known to both the transmitter and the receiver so that, e.g., the receiver can subsequently undo the mapping and recover the input data stream.

A given frame of data may be divided into multiple blocks of bits by the line mapper for distribution of individual bits among the two polarization channels. The granularity, i.e., the size of individual blocks of bits for this purpose, may vary depending on the specific application. However, it is preferable for the granularity to be at a substantially shorter timescale than the delay applied between the two bitstreams a1 and a2. By way of illustration, a typical time delay may be on the order of milliseconds, but a suitable timescale for the line-mapper granularity may be on the order of microseconds.

As an aid to understanding, a pedagogical example will be presented, below, of a linear rule for mixing the respective bitstreams.

Framers perform the encapsulation of data bits for synchronizing the data stream, among other things. Accordingly, the de-framer circuitry removes the encapsulation, as needed for the further processing of the data stream. The de-framer output is a binary sequence here denominated as sequence b.

Because of the duplication of the original input binary bitstream, the sequence b has twice the throughput of bitstream a1 or bitstream a2, taken individually. For an input stream entering the modem at the transmitter side at a rate of 100G, for example, the sequence b exiting the framer will have a doubled throughput of 200G. Consequently, the modem at both the transmitter side and the receiver side will carry a line rate that is twice the input client rate at the transmitter side and twice the output client rate at the receiver side.

The sequence b is directed as input to subsystem **75** for physical layer processing, which includes FEC encoding and the digital signal processing and analog processing required to send the information flow onto the optical path. Subsystem **75** may be implemented as, e.g., a WDM line card or a coherent transponder.

As bitstream b enters subsystem **75**, it is directed as input to FEC unit **85,** which produces, as output, an encoded bitstream that may include, e.g., an expanded number of bits to facilitate bit-error correction at the receiver. The output of FEC unit **85** passes to digital signal processor (DSP) **90.** DSP **90** converts the encoded bitstream to a set of digital driving signals for the optical modulator, according to the desired modulation format.

The output of DSP **90** is shown in FIG. 4 as having four branches. Two of the branches are for one of the two polarization channels to be transmitted, referred to here without loss of generality as the V channel. The other two branches are for the other polarization channel to be transmitted, referred to here without loss of generality as the H channel. The optical modulator, described below, is a coherent optical modulator. As such, the modulator is driven by a pair of signals referred to as the in-phase, or I-channel, signal component and the quadrature, or Q-channel, signal component. Accordingly, within each polarization channel, one branch of the DSP output is for the I-channel signal component and the other branch is for the Q-channel component.

Each of the four digital output streams from DSP **90** is respectively converted to an analog signal stream by digital-to-analog converter (DAC) unit **95.** The analog output streams from DAC unit **95** are the driving signals for optical modulator **100.**

Optical modulator **100** is a dual-polarization IQ modulator. As such, modulator **100** generates an output optical signal for transmission by a combination of coherent optical modulation and polarization multiplexing over the H and V polarization channels. Dual polarization IQ modulators are known in the art. By way of example, a dual polarization IQ modulator may generate a polarization-multiplexed signal by using a pair of individual IQ modulators, each dedicated to one of the respective polarization channels.

Turning to the receiver side, optical front end (FE) **105** of receiver **15** comprises a coherent, dual polarization optical receiver that converts the arriving, data-modulated optical signal to four parallel analog data streams corresponding, respectively, to the I-channel and Q-channel components of the signals received on each of the two polarization channels.

Dual polarization coherent receivers are known in the art. A conventional single-polarization coherent receiver may, by way of example, utilize a 90° optical hybrid, a local optical oscillator, and for photodetection, a set of four photodiodes or two balanced photodiode pairs. A dual polarization coherent receiver could, e.g., utilize one such receiver for each of the two polarization channels, together with a polarization splitter-rotator (PSR) or other optics for polarization beam splitting and rotation.

The four analog output streams from FE **105** are converted to respective digital data streams in ADC unit **110.** The output streams from ADC unit **110** proceed to DSP **115,** where a digital signal processing chain is applied. The digital processing chain may include, among other things, equalization to remove inter-symbol interference, and clock-frequency recovery. The digital processing chain also includes polarization demultiplexing, compensation for polarization rotation, adaptive equalization, and estimation of the carrier phase.

DSP **115** generates a digital output data stream, which proceeds to FEC decoder **120.** FEC decoder **120** processes the data stream from DSP **115** to produce a digital data stream, here denominated as bitstream b', that has been decoded and subjected to forward error correction. FEC decoder **120** may also have the capability to generate a quality indicator for respective portions of the decoded data stream, and to forward the quality indicator to processor **125,** which is discussed below.

Various types of quality indicator may be suitable, including, by way of example and without limitation, a bit-error rate or other indicator of a decoding error level, a count of the number of uncorrected code blocks at the FEC stage per unit time, a flag when a data packet is not decoded, or an indicator of continuity of a stream of received packets. One example that may be of particular interest is an indicator of whether the instantaneous decoding status is "success" or "failure." Another example that may be of particular interest is the cyclic redundancy check (CRC) of the FEC frame.

After FEC decoding, the received bit sequence b' is inversely framed and demapped at framing and de-mapping unit **130** to recover the two bitstreams a1' and a2' that correspond, respectively, to the transmitted bitstreams a1 and a2. More specifically, de-mapping unit **130** generates the respective output digital data streams a1' and a2' by unmixing temporally simultaneous and/or adjacent portions of the demodulated digital streams from the respective polarization channels according to a preselected unmixing rule. The preselected unmixing rule may be, e.g., the inverse of a preselected linear mixing rule applied at the transmitter.

Bitstream a1' is delayed by approximately $\Delta T$ relative to bitstream a2'. Accordingly, the respective frames of bitstreams a1' and a2' are aligned to each other by delay element **135,** which applies a suitable delay to bitstream a1'.

Delay element **135** could be implemented by, e.g., a buffer function, which would typically be realized in an FPGA. A typical value for the relative delay $\Delta T$ could be between 10 ms and 100 ms. For example, without limitation, a buffer size of 100 Mbits could be sufficient for a relative delay $\Delta T$ of 10 ms and a bit rate of 10 Gbits/s.

As indicated symbolically by signal path **03** in FIG. 4, the value of relative delay $\Delta T$ applied at transmitter-side delay element **65** may be communicated to receiver-side delay element **135.** For example, the value of $\Delta T$ could be transmitted from the transmitter side in one of the free header blocks of a frame, e.g. an Ethernet frame, and extracted therefrom at the receiver side.

The relative delay applied at delay element **135** may be identical to delay $\Delta T$, or it may take an adjusted value obtained, e.g., from a correlation analysis between bitstreams a1' and a2' that is performed at the receiver side. Such a correlation analysis could be performed in, e.g., a digital signal processor. In embodiments, the delay may be applied in two stages, one of which is a coarse stage and the other of which is a fine stage. The delay applied at the coarse stage could be, e.g., the value $\Delta T$ applied at the transmitter side. The additional delay applied at the fine stage could be, e.g., a value obtained from the correlation analysis.

Bitstream a2' is passed without added delay to selection module **145,** and bitstream a1' is passed to selection module **145** after delay has been applied, as explained above. A quality indicator for respective portions of the decoded data stream is also passed to selection module **145,** exemplarily from FEC decoder **120,** discussed above.

At selection module **145,** selection logic is applied to select between each incoming segment of bitstream a1' and the corresponding segment of bitstream a2', i.e., the segment corresponding to the same transmitted data. The selection is made based on the quality indicator, as explained in more detail below. The number of bits in an individual segment may vary, depending on the specific application. By way of example, but without limitation, a bitstream segment may be comparable in size to an Ethernet frame.

Selection module **145** may, in various embodiments, include a logic circuit with an output that toggles between the value of the current a1' bit and the value of the current a2' bit, depending on whether a logical control value takes the value 0 or the value 1.

An example of such a logic circuit is provided in FIG. 4. Turning again to FIG. 4, selection module **145** in an example embodiment includes AND gates **150** and **155,** both of whose outputs go to adder **160.** AND gate **150** has one inverting input and one non-inverting input, whereas AND gate **155** has two non-inverting input, as shown in the figure. Bitstream a1' goes to a non-inverting input of AND gate **150,** and bitstream a2' goes to a non-inverting input of AND gate **155.** Processor **125** generates a logical control signal in response to the input that it receives from the FEC decoder, indicative of received signal quality. The control signal goes to the inverting input of AND gate **150,** and to the other non-inverting input of AND gate **155.**

In operation, a logical 1 from processor **125** will cause the output from AND gate **150** due to each sequential bit of the a1' segment to take the value 0. By contrast, the logical 1 from processor **125** will cause the output from AND gate **155** due to each sequential bit of the a2' segment to take the same value as the corresponding bit. As a consequence, adder **160** will output a copy of the a2' segment. On the other hand, a logical 0 from processor **125** will cause the output from AND gate **150** due to each sequential bit of the a1' segment to take the the same value as the corresponding bit. By contrast, the logical 0 from processor **125** will cause the output from AND gate **155** due to each sequential bit of the a2' segment to take the value 0. As a consequence, adder **160** will output a copy of the a1' segment.

It should be understood that the arrangement described here is only one of many possible arrangements capable of performing the segment-selection function, and hence should be understood only as illustrative and not as limiting.

A quality threshold may be set for the quality indicator and used by processor **125** to generate a control signal for selection module **145.** The quality threshold may correspond to, e.g., an error level above which the decoding of the corresponding portion of the data-modulated optical carrier fails. In one possible approach, the selection circuitry is configured to select, for each segment having corresponding transmitted data, i.e., of the decoded a1' and a2' data streams, the segment having the higher quality indicator.

In an alternative approach, the selection circuitry is configured to select the segment from bitstream a1', which was transmitted earlier than its corresponding segment from bitstream a2'. However, a decrease in the a1' quality indicator to a value below the quality threshold could be an indication of a fading event. In such an instance, the selection circuitry is, accordingly, configured to select, instead, the corresponding segment of bitstream a2', i.e., the segment that corresponds to the same sequence of transmitted data bits. This alternate selection could be unconditional, or it could be conditional on a verification that the a2' quality indicator is above the quality threshold. A return of the a1' quality indicator to a value above the threshold could be an indication that the fading event is over. In such an instance, the selection circuitry is configured, accordingly, to return to the default selection, i.e., the selection of a1' segments.

In examples, processor **125** and selection module **145** could be configured to make selection decisions between bitstream a1' and bitstream a2' as often as once per frame, which at typical frame rates would give a decision interval of several microseconds. On the other hand, a decision interval as long as 1 ms may still be sufficiently responsive, relative to the dynamics of the optical power fluctuations, to provide useful performance. Hence, it may be desirable, for at least some applications, to perform the selection decision at intervals that are several frames in length.

As explained above, time diversity is implemented at the transmitter side by adding a relative delay $\Delta T$ between the two copies a1 and a2 of the bitstream that is to be transmitted. In embodiments, the relative delay $\Delta T$ may be a variable quantity that can be adjusted, for example to optimize performance under the instant conditions.

It may be desirable to set the relative delay $\Delta T$ to a value that is greater than, or approximately equal to, a fading interval defined as the average interval, or alternatively, as the maximum interval, over which the received optical power is too low for successful demodulation.

It may also be beneficial for the relative delay $\Delta T$ to include an additive factor for processor recovery time, an additive factor for framer delay, or both. By "processor recovery time" is meant a delay introduced while the DSP and FEC chains return to steady state after a signal interruption. By "framer delay" is meant the minimum time required, after a signal interruption, for the framer to recover the frame structure after the DSP chain has converged.

Accordingly, it may be desirable, for at least some applications, to set $\Delta T$ to a value that is greater than the sum of the fading interval, the recovery time, and the framer delay.

In practice, typical values for the relative delay $\Delta T$ would lie in the range 10-100 ms, although this range should be understood as a non-limiting example, and values outside this range are not excluded. In examples, $\Delta T$ could be set to an intermediate value that strikes a tradeoff between latency and decoding rate.

In embodiments, the client-layer functionalities represented in FIG. 4 could be implemented in circuitry that is hosted on one or two add-on cards configured to be plugged into electrical input/output receptacles on existing optical data transceivers or modems. That is, a card could be configured with all of the functionality of transmitter-side client layer **30,** including duplicator **40,** delay element **65,** and de-framer and line mapper unit **70.** The same card, or a separate card, could be configured with all of the functionality of receiver-side client layer **31,** including framer and line-mapper unit **130,** delay element **135,** processor **125,** and selection module **145.** The add-on card or cards could potentially be pluggable into an optical modem, transceiver, or the like, provided it shared the same client interfaces for input and output.

EXAMPLE

To aid in the understanding of formatter and deformatter operation, we provide, below, a pedagogical example of how a deformatter may generate first and second output digital data sequences by mixing simultaneous and/or temporally adjacent segments of, respectively, a first digital data stream and a second digital data stream according to a preselected linear mixing rule.

As the purpose of the following example is pedagogical, it describes a simple example in which the two individual data-stream segment are being subjected to the mixing by the deformatter operation or rule two bits at a time, i.e., in two bit segments. In many applications, however, the operation may be applied to segments of the data-streams that are substantially greater than two bits in length, e.g., segments of about 66 bits or more and/or more generally segments long enough to sample atmospheric fluctuations in free-space optical communication. Extension of the technique as described below to data-stream segments of any size would be straightforward to those skilled in the relevant arts based on the teachings of this application.

The objective is to use a de-formatter matrix **M** to mix each 2-bit segment of first binary data stream $b$ with a corresponding 2-bit segment of second binary data stream $sb$. Stream $b$ is the input, i.e., non-shifted, data stream, and stream $sb$ is the corresponding time-shifted data stream, i.e., $b$ and $sb$ are input to an example deformatter of FIG. 4.

The respective data streams are explicitly represented by:

$$b = (b_1, b_2, b_3, b_4, b_5, b_6, \ldots)$$

$$sb = (sb_1, sb_2, sb_3, sb_4, sb_5, sb_6, \ldots)$$

An example binary de-formatter matrix M is given by:

$$\mathbf{M} = \begin{bmatrix} 1 & 0 & 0 & 0 \\ 0 & 0 & 0 & 1 \\ 0 & 0 & 1 & 0 \\ 0 & 1 & 0 & 0 \end{bmatrix}$$

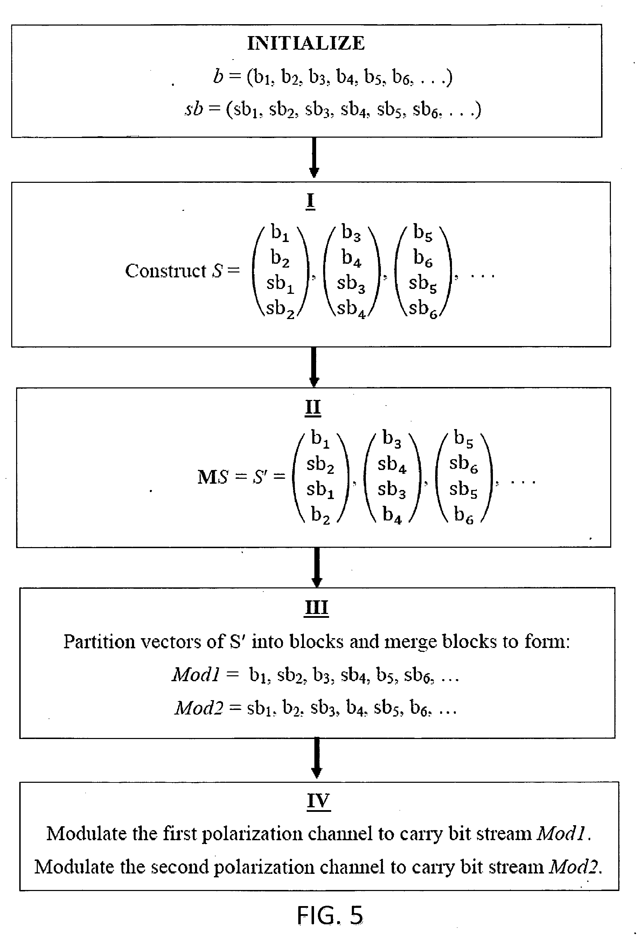

The following steps, which appear in FIG. 5 as blocks of a flowchart, describe how the mixing rule acts, in two-bit segments, on each of the two input data streams $b$ and $sb$:

**I.** Construct sequence $S$, consisting of the $4 \times 1$ vectors

$$\begin{pmatrix} b_1 \\ b_2 \\ sb_1 \\ sb_2 \end{pmatrix}, \begin{pmatrix} b_3 \\ b_4 \\ sb_3 \\ sb_4 \end{pmatrix}, \begin{pmatrix} b_5 \\ b_6 \\ sb_5 \\ sb_6 \end{pmatrix}, \ldots$$

**II.** Apply matrix **M,** in turn, to each vector of sequence $S$, i.e., perform

$$\mathbf{M}\begin{pmatrix} b_1 \\ b_2 \\ sb_1 \\ sb_2 \end{pmatrix}, \ \mathbf{M}\begin{pmatrix} b_3 \\ b_4 \\ sb_3 \\ sb_4 \end{pmatrix}, \ \mathbf{M}\begin{pmatrix} b_5 \\ b_6 \\ sb_5 \\ sb_6 \end{pmatrix}, \dots,$$

to obtain the new sequence $S'$, consisting of the $4\times1$ vectors

$$\begin{pmatrix} b_1 \\ sb_2 \\ sb_1 \\ b_2 \end{pmatrix}, \begin{pmatrix} b_3 \\ sb_4 \\ sb_3 \\ b_4 \end{pmatrix}, \begin{pmatrix} b_5 \\ sb_6 \\ sb_5 \\ b_6 \end{pmatrix}, \dots$$

.

III. Partition each vector of sequence $S'$ into an upper block and a lower block of two bits each. Merge the upper blocks into a bit sequence

$$Mod1 = \ b_1, \ sb_2, \ b_3, \ sb_4, \ b_5, \ sb_6, \ \dots$$

Merge the lower blocks into a bit sequence

$$Mod2 = sb_1, \ b_2, \ sb_3, \ b_4, \ sb_5, \ b_6, \ \dots$$

These two binary sequences are the output of the example deformatter of the optical data transmitter of FIG. 4.

IV. At the output of the deformatter, modulate the first polarization channel to carry bit stream *Mod1,* and modulate the second polarization channel to carry bit stream *Mod2.*

It should be noted that there may be separate FEC encoding on the respective output streams from the deformatter prior to their modulation onto the optical signal.

The de-formatter matrix **M** is invertible. The corresponding formatter matrix is the inverse matrix **M⁻¹** given by:

$$\mathbf{M}^{-1} = \begin{bmatrix} 1 & 0 & 0 & 0 \\ 0 & 0 & 0 & 1 \\ 0 & 0 & 1 & 0 \\ 0 & 1 & 0 & 0 \end{bmatrix}$$

It will be understood that, by virtue of the use of a de-formatter matrix such as matrix **M,** the mixing rule described here is linear.

It will be seen that in the particular example presented here, which should be understood as non-limiting, the matrix **M** is an involutory matrix.

**Claims**

1.   An apparatus, comprising:

an optical data receiver configured to generate first and second demodulated input digital data streams from corresponding first and second data-modulated optical signals received therein via a free-space optical link on corresponding first and second polarization channels; and

wherein the optical data receiver includes first digital circuitry to generate first and second output digital data streams by unmixing temporally simultaneous and/or adjacent portions of the first and second demodulated digital streams according to a preselected linear unmixing rule; and

wherein the optical data receiver includes second digital circuitry to select between corresponding segments of the first and second output digital data streams, each segment of a corresponding pair of the segments corresponding to the same transmitted data sequence; and

wherein the second digital circuitry is configured to perform the selecting based on a quality indicator for the first and second data-modulated signals.

2. The apparatus of claim 1, wherein the second digital circuitry is configured to perform the selecting based on estimated bit-error rates of the segments of the first and second output digital data streams.

3. The apparatus of claim 1, wherein the first digital circuitry comprises forward error correction circuitry configured to generate indicators of decoding error; and

wherein the optical data receiver is configured to determine values of the quality indicator based on the indicators of decoding error.

4. The apparatus of claim 1, wherein the optical data receiver is configured to estimate a relative delay between the segments corresponding to a same transmitted data sequence by estimating a correlation therebetween.

5. The apparatus of claim 1, wherein the optical data receiver is configured to estimate a value for the relative delay between the segments corresponding to a same transmitted data sequence based on data packet identifiers carried by the first and second data-modulated optical signals.

6. The apparatus of claim 1, wherein the optical data receiver is configured to receive, via the free-space optical link, a value for a relative delay between the corresponding segments.

7. The apparatus of any of claims 1 to 9, comprising an optical data transmitter configured to transmit the first and second data-modulated optical signals to the free space optical link.

8. The apparatus of claim 7, wherein the optical data transmitter is configured to cause the first and second data-modulated optical signals to collectively carry plural copies of a same input digital data stream.

9. The apparatus of claim 7 or 8, wherein the optical data transmitter is configured to transmit the respective first and second data-modulated optical transmissions to different polarization channels via the free-space optical link.

10. An apparatus, comprising:

an optical data transmitter configured to generate first and second digital data streams such that both digital data streams carry a same digital data sequence with a relative temporal offset; and

wherein the optical data transmitter includes first digital circuitry configured to generate first and second output digital data sequences by mixing simultaneous and/or temporally adjacent portions of the first and second digital data streams according to a preselected linear mixing rule; and

wherein the optical data transmitter includes an optical front end configured to modulate the first output digital data sequence onto a first polarization component of an optical signal and to modulate the second output digital data sequence onto a different second polarization component of the optical signal.

11. The apparatus of claim 10, wherein the first digital circuitry is configured to generate the first and second digital data streams as copies of the digital data sequence and to relatively delay one of the first and second data streams prior to performing the mixing.

12. The apparatus of claim 10 or 11, wherein the optical data transmitter is configured to transmit the optical signal to a free-space optical channel.

13. The apparatus of any of claims 10 - 12, wherein the first digital circuitry is configured to process each of the output digital sequences to provide forward error correction support therein.

FIG. 1

FIG. 2

FIG. 3

EP 4 542 880 A1

FIG. 4

13

**INITIALIZE**

$$b = (b_1, b_2, b_3, b_4, b_5, b_6, \ldots)$$

$$sb = (sb_1, sb_2, sb_3, sb_4, sb_5, sb_6, \ldots)$$

**I**

$$\text{Construct } S = \begin{pmatrix} b_1 \\ b_2 \\ sb_1 \\ sb_2 \end{pmatrix}, \begin{pmatrix} b_3 \\ b_4 \\ sb_3 \\ sb_4 \end{pmatrix}, \begin{pmatrix} b_5 \\ b_6 \\ sb_5 \\ sb_6 \end{pmatrix}, \ldots$$

**II**

$$MS = S' = \begin{pmatrix} b_1 \\ sb_2 \\ sb_1 \\ b_2 \end{pmatrix}, \begin{pmatrix} b_3 \\ sb_4 \\ sb_3 \\ b_4 \end{pmatrix}, \begin{pmatrix} b_5 \\ sb_6 \\ sb_5 \\ b_6 \end{pmatrix}, \ldots$$

**III**

Partition vectors of S' into blocks and merge blocks to form:

$$Mod1 = b_1, sb_2, b_3, sb_4, b_5, sb_6, \ldots$$

$$Mod2 = sb_1, b_2, sb_3, b_4, sb_5, b_6, \ldots$$

**IV**

Modulate the first polarization channel to carry bit stream *Mod1*.

Modulate the second polarization channel to carry bit stream *Mod2*.

FIG. 5

Europäisches
Patentamt

European
Patent Office

Office européen
des brevets

# EUROPEAN SEARCH REPORT

Application Number

EP 23 31 5393

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2017/272173 A1 (ITO CHRISTOPHER JOSHUA SHIRO [US]) 21 September 2017 (2017-09-21) * paragraph [0004] - paragraph [0018]; figures 4A,4B,6 * * paragraph [0040] - paragraph [0043] * * paragraph [0046] - paragraph [0054] * | 1-13 | INV. H04B10/118 H04B10/61 H04B10/532 H04J14/06 |
| A | N. CVIJETIC ET AL: "Polarization-Multiplexed Optical Wireless Transmission With Coherent Detection", JOURNAL OF LIGHTWAVE TECHNOLOGY, vol. 28, no. 8, 1 April 2010 (2010-04-01), pages 1218-1227, XP055226210, USA ISSN: 0733-8724, DOI: 10.1109/JLT.2010.2044017 * Section III; figure 5 * | 1-13 | |
| A | CN 112 383 354 B (UNIV SHENZHEN) 8 July 2022 (2022-07-08) * the whole document * | 1-13 | |
| A | US 7 106 971 B1 (DAVIS CHRISTOPHER C [US]) 12 September 2006 (2006-09-12) * the whole document * | 1-13 | TECHNICAL FIELDS SEARCHED (IPC) H04B H04J |
| A | WO 2017/205652 A1 (SCHAFER AEROSPACE INC [US]) 30 November 2017 (2017-11-30) * paragraph [0039] - paragraph [0049]; figures 2,3 * | 1-13 | |

The present search report has been drawn up for all claims

| Place of search | Date of completion of the search | Examiner |
|---|---|---|
| Munich | 20 March 2024 | Gäde, Sebastian |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 23 31 5393

This annex lists the patent family members relating to the patent documents cited in  the above-mentioned European search report.
The members are as contained in the European Patent Office EDP file on
The European Patent Office is in no way liable for these particulars which are merely given for the purpose of information.

20-03-2024

| Patent document cited in search report | | | Publication date | Patent family member(s) | | | Publication date |
|---|---|---|---|---|---|---|---|
| US 2017272173 | A1 | | 21-09-2017 | US | 2017272173 | A1 | 21-09-2017 |
| | | | | US | 2018062758 | A1 | 01-03-2018 |
| | | | | WO | 2017160391 | A1 | 21-09-2017 |
| CN 112383354 | B | | 08-07-2022 | NONE | | | |
| US 7106971 | B1 | | 12-09-2006 | NONE | | | |
| WO 2017205652 | A1 | | 30-11-2017 | EP | 3451931 | A1 | 13-03-2019 |
| | | | | US | 2017346564 | A1 | 30-11-2017 |
| | | | | US | 2019173580 | A1 | 06-06-2019 |
| | | | | WO | 2017205652 | A1 | 30-11-2017 |

EPO FORM P0459

For more details about this annex : see Official Journal of the European Patent Office, No. 12/82